# EUROPÄISCHE PATENTSCHRIFT

(11) **EP 1 670 619 B1**
(45) Veröffentlichungstag und Bekanntmachung des Hinweises auf die Patenterteilung: **10.07.2013**
(21) Anmeldenummer: 04762504.1
(22) Anmeldetag: 24.07.2004
(51) Int. Cl.: B25F 5/02, H02J 7/00

(54) **Ladegerät für einen Akkuschrauber**
Charging device for a battery-driven screwdriver
Appareil de charge pour une visseuse à batterie

(30) Priorität: 29.09.2003 DE 10345135
(43) Veröffentlichungstag der Anmeldung: 21.06.2006
(73) Patentinhaber: ROBERT BOSCH GMBH, 70442 Stuttgart (DE)
(72) Erfinder: KAGELER, Sven, 11900 Bayan Lepas Penang (MY); YUH GAN, Ginn, 10450 Penang (MY); AZIZ ZULFIKAR, Abdul, 10050 Penang (MY)
(86) Internationale Anmeldenummer: PCT/DE2004/001657
(87) Internationale Veröffentlichungsnummer: WO 2005/039833

(56) Entgegenhaltungen:
- EP-A- 1 253 673
- EP-A- 1 266 725
- DE-U- 9 014 132
- DE-U- 9 206 493
- US-A- 3 369 615
- US-A- 3 659 180
- US-A- 4 493 223
- US-A- 4 739 242
- US-A- 6 106 971
- US-A1- 2003 094 294
- US-E- R E37 092
- PATENT ABSTRACTS OF JAPAN Bd. 1997, Nr. 06, 30. Juni 1997 (1997-06-30) & JP 9 047982 A (NIPPON ELECTRIC IND CO LTD), 18. Februar 1997 (1997-02-18)

## Beschreibung

### Stand der Technik

Die vorliegende Erfindung geht aus von einem Ladegerät gemäß dem Oberbegriff des Anspruchs 1. Ein solches Ladegerät ist aus der JP 9 047 982 A bekannt.

Es gibt bereits Akkuschrauber in der Leistungsklasse zwischen 2.4V bis 3.6V, wie beispielweise aus der EP 1 066 930 bekannt. Diese haben zumeist mehrere NiCd-Zellen als Energiespeicher, einen Ein-Aus-Schalter mit kurzer Schalttaste und ohne stufenlose Drehzahlregelung sowie einen Schalter zur Umschaltung von Links- auf Rechtslauf, ein die Motordrehzahl untersetzendes Getriebe, insbesondere Planetengetriebe, und einen Motor mit einem Standard-Durchmesser von 27.5mm. Dabei gibt es stabförmige und pistolenförmige Ausführungen sowie Ausführungen mit winkelverstellbarem Griff. Diese Geräte werden zum Laden entweder über einen Stecker mit dem Ladegerät verbunden - ähnlich wie ein Handy oder ein Rasierapparat - oder über eine Halterung mit Kontakten, in die das Gerät gelegt wird. Die Halterungen sind z. B. an einer Wand befestigbar, um die Handhabung beim Laden zu vereinfachen.

Dazu muss zuvor für das Ladegerät und die elektrische Verbindung der Lademodus hergestellt werden, was jedoch nicht automatisch nach jedem Einsatz geschieht. Dadurch ist das Gerät oft gerade dann nicht einsatzbereit ist, wenn es benötigt wird, wobei der bekannte Memoryeffekt nachteilig hinzukommt. NiCd Zellen entladen nach einer gewissen Zeit ohne Leistungsabgabe und auch unbenutzte Akku-Schrauber sind nach kurzer Zeit teilentladen. Werden sie geladen, wenn sie teil-entladen sind, steht aufgrund des Memoryeffekts nach dem Ladevorgang nur die Differenz der Neulademenge - und damit eine verringerte Leistung - zur Verfügung.

Ein weiterer Nachteil der bekannten Akkuschrauber ist deren voluminöse Baugröße infolge großer Baugruppen, z.B. des Getriebes, der Schaltersysteme und der Akkus in Gestalt von NiCd Zellen, deren Größe "4/5 Sub-C" bei Anordnung im Handgriff die Ergonomie und die Verwendbarkeit beeinträchtigt, da enge, winklige Schraubstellen nicht erreichbar sind.

### Vorteile der Erfindung

Der erfindungsgemäße Ladegerät mit den Merkmalen des Anspruchs 1 hat den Vorteil, dass ein Akkuschrauber durch sein Eigengewicht gesichert lagern kann.

Vorteilhafte Ausführungen des erfindungsgemäβen Ladegeräts sind in den Unteransprüchen beschrieben.

### Zeichnungen

Nachstehend ist die Erfindung anhand eines Ausführungsbeispiels mit zugehöriger Zeichnung näher erläutert.

Es zeigen
Figur 1 eine Seitenansicht eines nicht erfindungsgemäβen, teilweise geöffneten Akkuschraubers
Figur 2 eine Frontansicht des Akkuschraubers
Figur 3 eine Seitenansicht des in einer erfindungsgemäβen Ladeschale positionierten Akkuschraubers
Figur 4 einen vergrößerten Ausschnitt aus Figur 1 auf die Schalttaste
Figur 5 einen vergrößerten Ausschnitt des Getriebegehäuses aus Figur 1
Figur 6 eine Ansicht gemäß Figur 1 leicht gedreht
Figur 7 eine Ansicht gemäß Figur 6, leicht gedreht
Figur 8 eine räumliche Ansicht des Getriebegehäuses von vorn
Figur 9 eine räumliche Ansicht des Getriebes von hinten
Figur 10 eine räumliche Ansicht der Ladeschale von oben

### Beschreibung des Ausführungsbeispiels

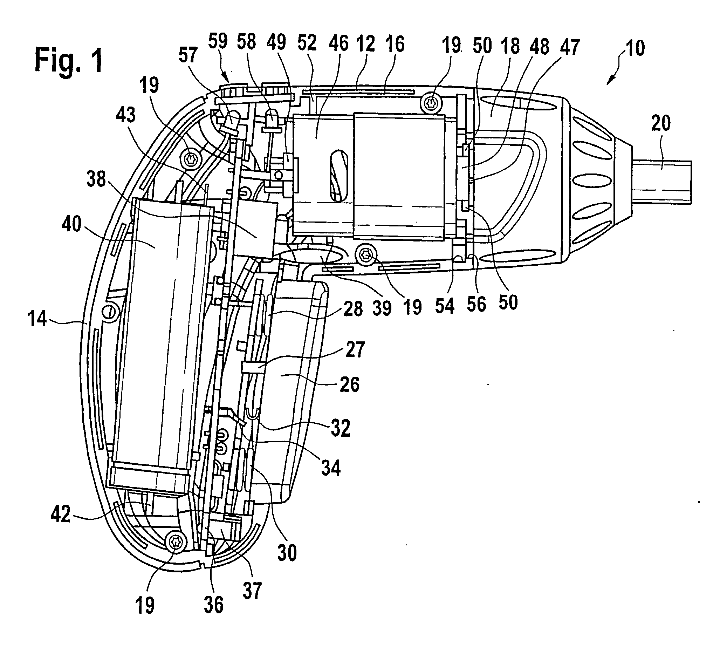

Figur 1 zeigt einen nicht erfindungsgemäβen, pistolenartigen Akkuschrauber 10 mit zur Schraubrichtung fluchtendem Motorgehäuse 12 und davon abgewinkeltem Handgriff 14. Das Motorgehäuse 12 mit Handgriff 14 wird aus zwei Halbschalen 16, 17 gebildet, die in einer Mittenebene 15 dicht aneinander abgestützt zusammenfügbar sind. Dazu greifen vier Schrauben durch Bohrungen der einen Halbschale 17 in vier Schraubdome 19 der anderen Halbschale 16 und halten beide aneinander fest.

Eine Ein-Ausschalttaste 26 ist annähernd über die gesamt innere Länge des Handgriffs 14 verlaufend angeordnet. Maschinenseitig bildet die Ein-Ausschalttaste 26 mit einem angeschraubten Kontaktblech 32 in Verbindung mit maschinenseitig fest angeordneten Gegenkontakten 34 einen Ein- und Ausschalter, so dass sich ein gesonderter, handelüblicher kastenartiger Standard-Schalter bzw. Taster erübrigt. Die Ein-Ausschalttaste 26 erlaubt wegen ihrer besonderen Länge ein bequemes Ein- und Ausschalten auch in schwierigen Haltepositionen des Akkuschrauber 10. Sie ist an ihren Längsseiten mit seitlichen in den Handgriff 14 tretenden Stützzungen 27 versehen, die an entsprechenden Gegenflächen der Halbschalen 16, 17 eine sichere Führung bilden und ein präzises, spielfreies Hin- und Her-Bewegen ermöglichen.

Über zwei harte Druckfedern 28, 30 ist die Ein-Ausschalttaste 26 am Handgriff 14 elastisch abgestützt, so dass nach dem Einschalten die Federn 28, 30 die Ein- und Ausschalttaste 26 bei deren Loslassen selbsttätig in ihre Aus-Position zurückbefördern, die Kontakte 32, 34 trennen und die Motorbewegung stoppen. Der Betätigungshub ist durch nicht näher bezeichnete Anschläge begrenzt und ist mit 1 bis 4 mm sehr kurz und bedienfreundlich.

Zum Eintritt der Ein-Ausschalt-Taste 26 in das Motorgehäuse 12 ist eine entsprechende jeweils hälftig in den Halbschalen 16, 17 angeordnete Öffnung 29 vorgesehen, die die Ein-/Ausschalttaste 26 schachtartig führend eng umgreift. Die Ein-Ausschalttaste 26 trägt auf ihrer dem Handgriff 14 zugewandten Stirnseite oben und unten je eine längs überstehende Zunge, die die Öffnung 29 überragen und sich von innen an deren Rand abstützen und die Ein-Ausschalttaste 26 in der Ausschaltposition daran abstützend festhalten und Lösen aus dem Gehäuse 12 hindern.

Die dem Kontaktblech 32 zugeordneten Gegenkontakte 34 sind auf einer länglichen, sich im Inneren des Handgriffs 14 erstreckenden Platine 36 dem Kontaktblech 32 gegenüberliegend und in dessen Hubbereich angeordnet. Außerdem trägt die Platine 36 in ihrem unteren Bereich zwei symmetrisch angeordnete Ladekontaktzungen 37, die rechtwinklig aus der Ebene der Platine 36 austreten und dann jeweils am Ende nach außen abgewinkelte große Auflageflächen bilden. Diese durchtreten jede Halbschale 16, 17 symmetrisch zur Mittenebene 15 im unteren Ende des Handgriffs 14. Dabei sind sie an jeder Durchtrittsstelle in je einer Vertiefung innerhalb der Handgriffkontur "versenkt" eingebettet und für die nach außen überstehenden Ladekontakte 23 der Ladeschale 22 zugänglich, die sie im Ladezustand bei Auflage auf der Ladeschale 22 übergreifen und sich aufgrund deren federnder Anordnung sicher kontaktiert abstützen.

Des weiteren trägt die Platine 36 etwa mittig, flach und flächennah nicht näher bezeichnete Störwiderstände und Kondensatoren und im oberen Bereich den Schiebeschalter 38 sowie am oberen Ende zwei Leuchtdioden 57, 58 zur optischen Anzeige der Drehrichtung.

Die Platine 36 ist mit ihrer Längsseite parallel zum Handgriff 14 und mit ihrer Schmalseite quer zur Mittenebene 15 angeordnet und dabei in nicht näher bezeichneten nutartigen Aussparungen der beiden Halbschalen 16, 17 spielfrei so geklemmt, dass sie sich von Innen gegen die Halbschalen 16, 17 stützt und dadurch eine Verstärkungsrippe im Handgriff 14 bildet. Parallel zur Platine 36 ist im Handgriff 14 eine Lithium-Ionen-Zelle mit den bekannten Vorteilen als Akku 40 eingelegt, der von den beiden Halbschalen 16, 17 im Montagezustand zangenartig umgriffen und lagegesichert wird und damit in die Festigkeitsstruktur des Gehäuses 12 integriert ist. Der Akku 40 weist oben und unten jeweils ein als Lötfahne dienendes Kontaktblech 42, 43 auf, das mit der Platine 36 verdrahtet ist.

Oberhalb der Ein-Ausschalttaste 26 - im Zwickel zwischen abgewinkeltem Handgriff 14 und Motorgehäuse 12 - ist ein Schiebetaster 39 quer zur Mitteneben 15 des Motorgehäuses 12 durch nicht bezeichnete, seitliche Öffnungen der Halbschalen 16 17 hin- und herschiebbar angeordnet. Der Schiebetaster 39 umgreift mit einer nicht näher bezeichneten etwa mittigen Aussparung gabelartig ein Schiebeorgan 41 eines kastenartigen, im oberen Bereich der Platine 36 fixierten Schiebeschalters 38. Das auf den Schiebeschalter 38 aufgesetzte Schiebeorgan 41 ist über den Schiebetaster 39 in die äußerste linke und rechte Seitenposition und in eine Mittenposition verstellbar.

Ein gleichstrombetriebener Motor 46 im vorderen Bereich des Motorgehäuses 12 wird von den Halbschalen 16,17 nach deren Montage zangenartig umgriffen und in seiner Arbeitslage spielfrei, parallel zum im Motorgehäuse 12 eingelegten Getriebegehäuse 18 fluchtend ausgerichtet gehalten. Der Motor 46 hat einen hinteren und vorderen stufenartigen Motorbund 48, 49, aus dem das hintere und vordere Ende der Motorwelle 45 austritt. Der Motor 46 ist über seinen vorderen und hinteren Motorbund 48, 49 in entsprechenden lagerbockartigen Rippen der Halbschalen 16, 17 zentriert abgestützt gelagert. Das vordere Ende 47 der Motorwelle 45 ist mit einer Abflachung bzw. mit einem Zweiflach versehen, insbesondere umgeformt, und greift damit in der Montagelage in eine entsprechende abgeflachte Ausnehmung eines Eingangsritzels 66 des im Getriebegehäuse 18 angeordneten Getriebes 65, das als Planetengetriebe ausgestaltet ist. Damit ist eine kraftschlüssige Kupplung mit grober Maßtoleranz und einfacher Montagemöglichkeit geschaffen, wobei der Motor 46 mit dem Getriebe 65 bzw. dem Getriebegehäuse 18 leicht zusammensteckbar ist und zusammengesteckt zur weiteren Montage in eine der Halbschalen 16, 17 einlegbar ist.

Stirnseitig umgreifen die beiden Halbschalen 16, 17 zangenartig und formschlüssig ein als separate zylindrische Baugruppe montiertes Getriebegehäuse 18 und halten es spielfrei fest. Dieses hat in zwei axialen, sich zum Motorgehäuse 12 erstreckenden, zungenartigen, teilzylindrischen Verlängerungen 60 eine Gehäuseringnut 54, die von einem Ringwulst 55 begrenzt wird. Der Ringwulst 55 greift in eine passende Gegenringnut 56 innen an der Stirnseite der Halbschalen 16, 17 des Motorgehäuses 12, wobei passende Gegenringwulste 53 der Halbschalen 16, 17 formschlüssig in die Gehäuseringnut 54 des Getriebegehäuses 18 greifen.

In die zwei asymetrischen Aussparungen zwischen den zwei Verlängerungen 60 des Getriebegehäuses 18 greifen quer zur Längsrichtung des Motorgehäuses 12 abgewinkelte Gegenverlängerungen 61 fehlmontagesicher, spielfrei ein, die zugleich lagerbockartig den Motorbund 58 des Motors 46 zentrierend abstützen, so dass auch dieser in die Festigkeitsstruktur des Motorgehäuses 12 integriert ist. Gesonderte Befestigungselemente wie Schrauben oder dergleichen sind dabei unnötig. Dies erleichtert die Montage bei verringerter Anzahl von Einzelteilen.

Oben hinten trägt das Motorgehäuse 12 ein eingelegtes transparentes Fenster 59, das sich in der Trenneben längs erstreckt und mittig geteilt ist. Es gibt durch zwei Durchbrüche der Halbschalen 16, 17 den Blick auf eine blaue bzw. rote Leuchtdiode 57, 58 frei, jede einer Drehrichtung der Motorwelle 45 zugeordnet und mit dieser aufleuchtend.

Aus dem vom zu einem abgerundeten Kegel zulaufenden Getriebegehäuse 18 tritt vorn eine Abtriebsspindel 20, die stirnseitig als Innensechskant 21 zur Aufnahme passender Standardbits ausgestaltet ist. Der Innensechskant 21 ist mit Mitteln versehen, die den eingeschobenen Schraubbit oder Bohrbit gegen Verlieren festhalten, so dass für deren axiale Entnehmen ein gewisser Widerstand von Hand überwunden werden muss.

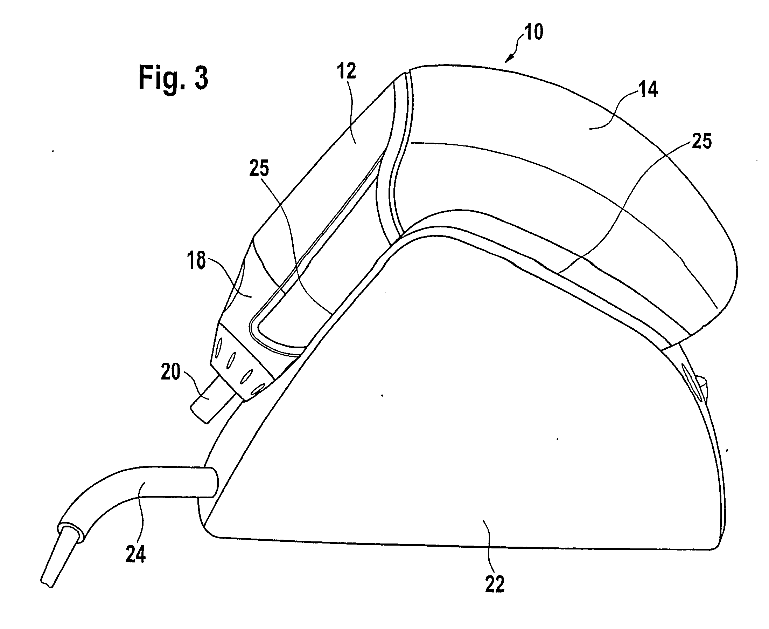

Figur 3 zeigt eine verhältnismäßig schmale, kastenartige Ladeschale 22, deren Außenkontur schrägflächig der pistolenförmigen Innen- bzw. Außenkontur des Akkuschraubers 10 angeglichen und nutartig vertieft ist. Der Akkuschrauber 10 kann daher mit seiner Innenseite in passende Einbettungen 25 für den Handgriff 14 bzw. des Motor- und Getriebegehäuse 12 und 18 spielfrei eintreten, und durch sein Eigengewicht gesichert lagern, wobei die Kontaktierung zwischen seinen Ladekontaktzungen 38 und den Ladekontakten 23 der Ladeschale 22 besonders sicher ist.

Die Ladekontakten 23 ragen aus der Kontur der Ladeschale 23 heraus, so dass der Akkuschrauber 10 mit seinem Handgriff 14 in eine entsprechende Aussparung der Ladeschale 12 rastet und sich dabei mit seinem Eigengewicht mit seinen Ladekontaktzungen 37 an den federnden Ladekontakten 23 der Ladeschale 22 abstützt. Allein durch Auflegen des Akkuschraubers 10 auf die Ladeschale 22 stellt sich sofort der Ladezustand mit hörbarem Klicken ein.

Die Ladeschale 22 weist in Betrachtungsrichtung links einen nicht näher bezeichneten elektrischen Steckkontakt zum Einführen eines Elektroanschlusskabels 24 zur Stromversorgung der Ladeschale 22 auf, die im hinteren, dem Handgriff 14 des Akkuschraubers 10 zugeordneten Bereich eine Ladekontrollleuchte 71 und eine senkrechte Einstecköffnung 73 zur Halterung eines Schraub- bzw. Bohrbits trägt.

Der Akkuschrauber 10 ruht mit seiner Innenseite, insbesondere mit seiner Ein-Ausschalttaste 26 auf der Oberseite einer Ladeschale 22 und nimmt dort im Aufliegen automatisch eine sichere Ladeposition ein, sofern die Ladeschale 22 mit dem Kabel 24 an eine passende Stromversorgung angeschlossen ist.

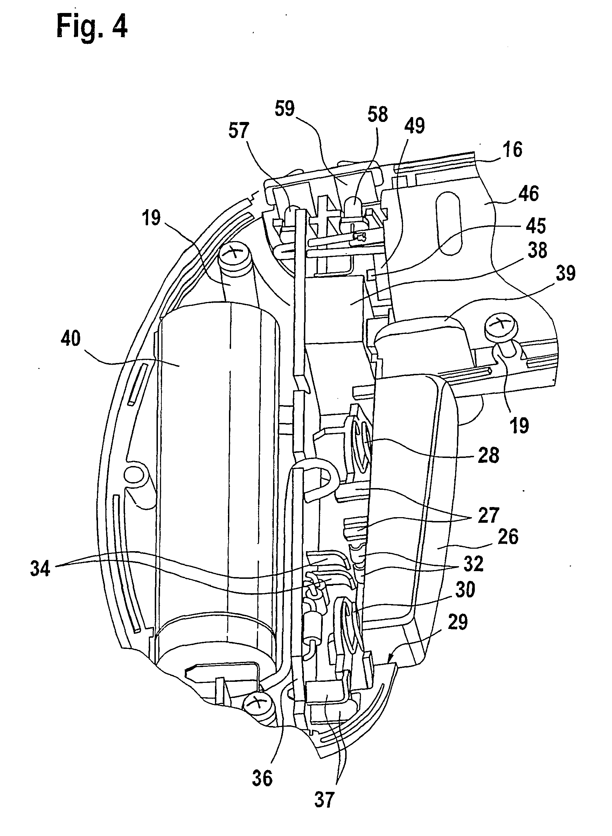

Figur 4 zeigt eine ausschnittsweise Vergrößerung der ersten Halbschale 16 mit den eingefügten Einzelteilen gemäß Figur 1, wobei die Ausgestaltung des Akkus 40 mit angrenzenden Teilen sowie der Platine 36 mit den daran befestigen Teilen sowie der Ein-Ausschalttaste 26 deutlich erkennbar ist.

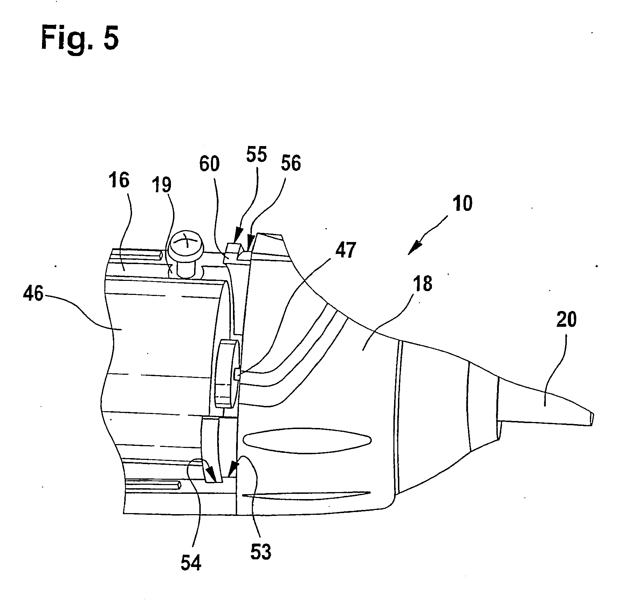

Figur 5 zeigt ausschnittsweise den vorderen Bereich des Akkuschraubers 10 mit der unteren Halbschale 16 mit Blick auf den Motor 46 und das Getriebegehäuse 18 - formschlüssig eingelegt.

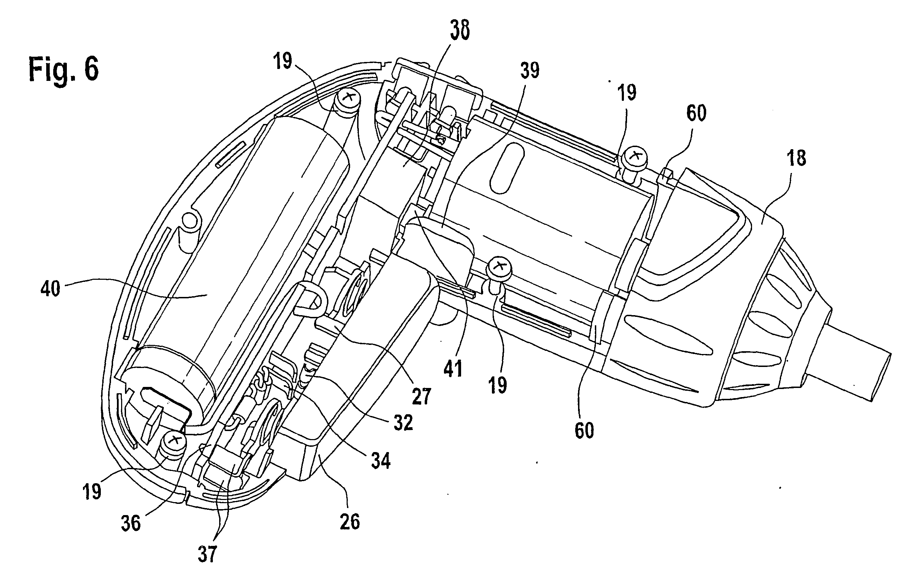

Figur 6 zeigt eine perspektivische Ansicht gemäß Figur 1 mit den entsprechenden Einzelheiten gemäß Figur 1, wobei über diese hinaus der Schiebetaster 39 zur Drehrichtungsumschaltung deutlicher erkennbar ist, der in seiner Mittenposition zugleich eine Einschaltsperre zum Betätigen der Ein-/Ausschalttaste 26 bildet. Dadurch ist in dieser Position ein ungewolltes Betätigen z.B. beim Transport in der Hosentasche nicht möglich.

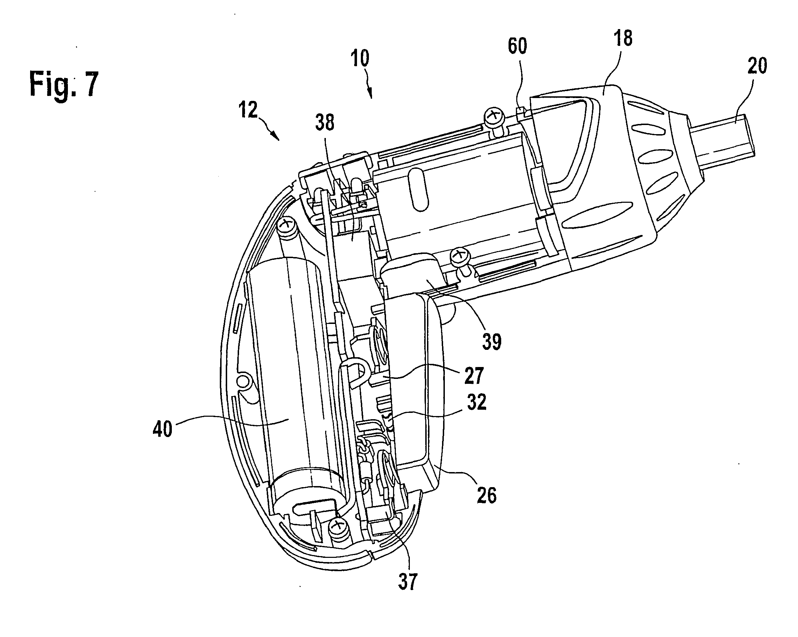

Figur 7 zeigt eine weitere räumliche Darstellung gemäß den Figuren 1 und 6, wobei die dazu beschriebenen Einzelheiten mit Hinweis auf diese Figuren nicht nochmals wiederholt werden, sondern deren Verständnis verbessern sollen.

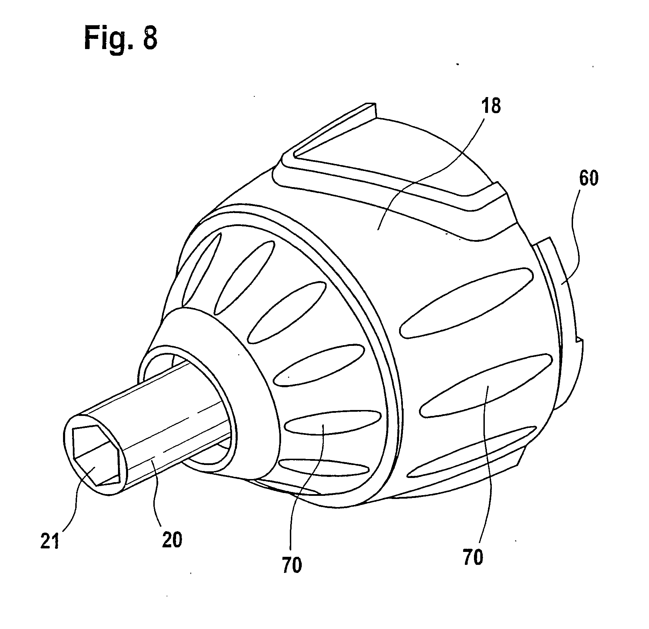

Figur 8 zeigt die Stirnseite des Getriebegehäuses 18 als Einzelheit mit eingebautem Getriebe 65 sowie der vom herausragenden Abtriebswelle 20 mit dem Innensechskant 21 sowie den vom Getriebegehäuse 18 nach hinten ragenden axialen Verlängerungen 60, wobei regelmäßige ovale Vertiefungen 70 auf der Außenseite des Getriebegehäuses 18 dessen Griffigkeit erhöhen.

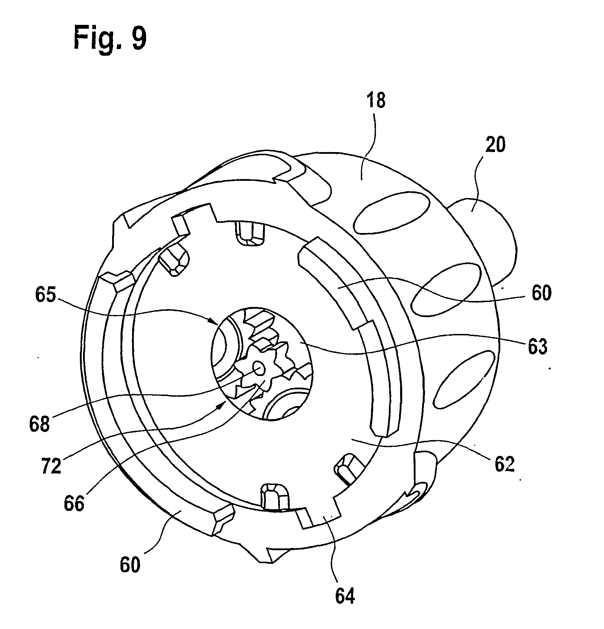

Figur 9 zeigt das hinten zylindrische Getriebegehäuse 18 gemäß Figur 8 in seiner Ansicht von hinten, wobei die beiden axialen Verlängerungen 60 und deren Zwischenräume, eine quer im Inneren des Getriebegehäuses 18 verrastete, über dessen gesamten Innendurchmesser reichende Federscheibe 62 mit einer Mittenöffnung 63 erkennbar sind.

Die Federscheibe 62 weist radial überstehende Flügel 64 auf, mit denen sie bajonettartig in entsprechende Aussparungen im Umfang des hinteren Endes des Getriebegehäuses 18 einlegbar und durch Verdrehen bzw. Verstemmen darin verrastbar ist.

Durch die Mittenöffnung 63 hindurch ist die Eingangswelle 66 des Getriebes 65 für den Eingriff der Motorwelle 47 zugänglich und mit deren abgeflachten Ende kuppelbar, so dass deren Drehmitnahme sicher erfolgen kann. Die Eingangswelle 66 hat eine Mittenausnehmung 68, die die Negativform des abgeflachten Endes der Motorwelle 47 bildet.

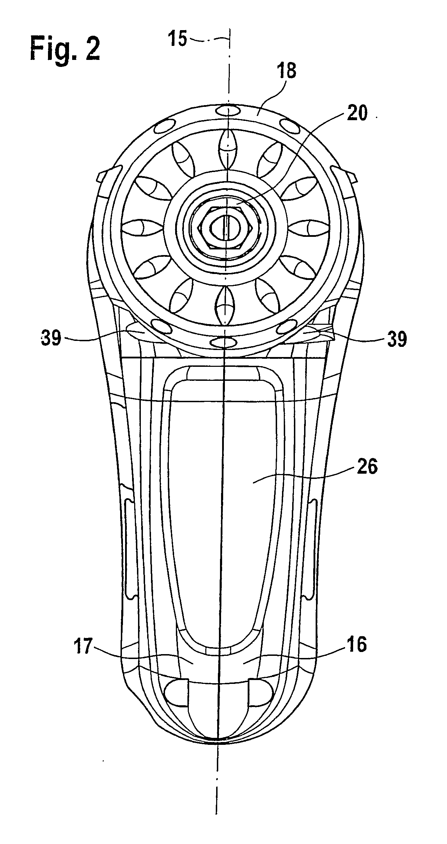

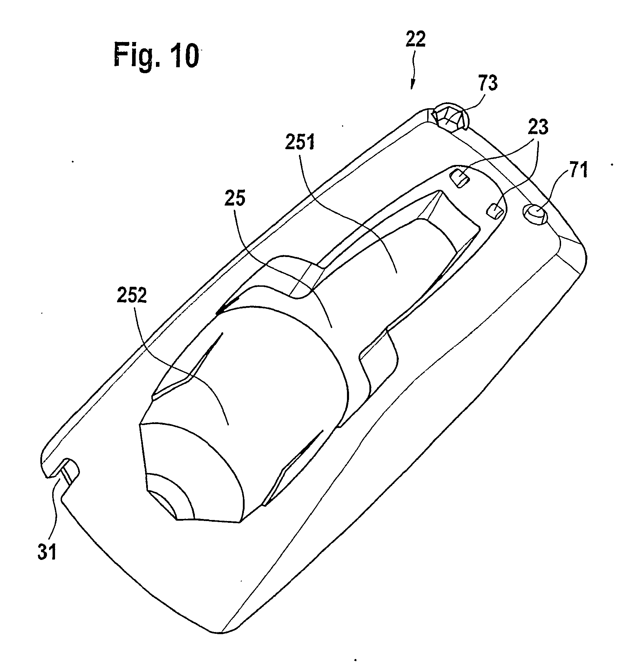

Figur 10 zeigt eine Draufsicht von oben auf die Ladeschale 22 mit Blick auf die Einbettung 25, die in eine Handgriffbettung 251 und einer Getriebegehäusebettung 252 unterteilt ist, so dass der Akkuschrauber 10 bündig und nahezu spielfrei eindeutig und narrensicher so in die Ladeschale 22 einlegbar ist, dass er sicher aufliegt und seine Ladekontaktzungen 37 (Figur 1, 2, 4, 6, 7) sicheren Kontakt mit den Ladekontakten 23 der Ladeschale 22 behalten.

## Patentansprüche

1. Ladegerät (22) für einen Akkuschrauber (10), welches auf seiner Oberseite (10) Einbettungen (25, 251, 252) zur Aufnahme eines Akkuschraubers (10) aufweist, **dadurch gekennzeichnet, dass** die Einbettungen (25, 251, 252) einem Abdruck von dem Handgriff (14), dem Motorgehäuse (12) und dem Getriebegehäuses (18) eingeschlossenen Innenwinkel-Außenflächen eines Akkuschraubers (10) entsprechen und dass mindestens eine der Einbettungen (25, 251, 252) weniger als 90 ° geneigt zur Senkrechten verläuft, wobei ein Akkuschrauber (10) derart in den Einbettungen (25, 251, 252) positionierbar ist, dass die Abtriebsspindel (20) zur Lotrechten geneigt ist und das Ende der Abtriebsspindel (20) nach unten weist.

2. Ladegerät (22) nach Anspruch 1, **dadurch gekennzeichnet, dass** die Einbettungen (25, 251, 252) um etwa 30 - 45 ° geneigt zur Senkrechten verlaufen, wobei ein Akkuschrauber (10) derart in den Einbettungen (25, 251, 252) positionierbar ist, dass die Abtriebsspindel (20) um etwa 30 - 45 ° zur Lotrechten geneigt ist und das Ende der Abtriebsspindel (20) nach unten weist.

3. Ladegerät (22) nach einem der Ansprüche 1 oder 2, **dadurch gekennzeichnet, dass** die Einbettungen (25, 251, 252) dergestalt sind, dass der Handgriff (14) eines Akkuschraubers (10) nur mit seiner Ein-Ausschalttaste (26) kielartig in die Einbettungen (25, 251, 252) eintritt und der Handgriff (14) selbst von der Ladegerät (22) absteht und nur minimal in die Einbettung (25, 251, 252) eintaucht.

4. Ladegerät (22) nach einem der vorhergehenden Ansprüche, **dadurch gekennzeichnet, dass** die Einbettungen (25, 251, 252) dergestalt sind, dass der Handgriff (14) eines Akkuschraubers (10) so weit von dem Ladegerät (22) absteht, dass der Akkuschrauber (10) zur Entnahme von Hand bequem untergreifbar und/oder weitgehend umgreifbar ist.

5. Ladegerät (22) nach einem der vorhergehenden Ansprüche, **dadurch gekennzeichnet, dass** im Lademodus Ladekontaktzungen (37) eines Akkuschraubers (10) auf Ladekontakten (23) des Ladegeräts (22) rasten, ohne dass gesonderte Kabel oder Kupplungsstecker betätigt werden müssen.

6. Ladegerät (22) nach Anspruch 5, **dadurch gekennzeichnet, dass** die Ladekontakte (23) des Ladegeräts (22) federnd ausgeführt sind und ein Akkuschrauber (10) derart in den Einbettungen (25, 251, 252) positionierbar ist, dass Vertiefungen (33) im Handgriff (14) des Akkuschraubers (10) die Ladekontakte (23) übergreift und damit überrastend gegen ungewolltes Lösen von dem Ladegerät (22) gesichert ist.

7. Ladegerät (22) nach einem der vorhergehenden Ansprüche, **dadurch gekennzeichnet, dass** das Ladegerät (22) standsicher auf eine ebene, insbesondere waagerechte, Ablagefläche stellbar ist, ohne dass sie befestigt und festgehalten werden, wenn der Akkuschrauber (10) entnommen wird.

## Claims

1. Charging unit (22) for a battery-operated screwdriver (10), which charging unit (22) has embedded portions (25, 251, 252) on its top side (10) for receiving a battery-driven screwdriver (10), **characterized in that** the embedded portions (25, 251, 252) correspond to an impression of interior-angle outer faces of a battery-operated screwdriver (10) which are enclosed by the handle (14), the motor housing (12) and the transmission housing (18), and **in that** at least one of the embedded portions (25, 251, 252) runs in a manner which is inclined with respect to the perpendicular by less than 90°, it being possible for a battery-operated screwdriver (10) to be positioned in the embedded portions (25, 251, 252) in such a way that the output spindle (20) is inclined with respect to the vertical and the end of the output spindle (20) points downwards.

2. Charging unit (22) according to Claim 1, **characterized in that** the embedded portions (25, 251, 252) run in a manner which is inclined with respect to the perpendicular by approximately from 30 to 45°, it being possible for a battery-operated screwdriver (10) to be positioned in the embedded portions (25, 251, 252) in such a way that the output spindle (20) is inclined with respect to the vertical by approximately from 30 to 45° and the end of the output spindle (20) points downwards.

3. Charging unit (22) according to either of Claims 1 and 2, **characterized in that** the embedded portions (25, 251, 252) are such that the handle (14) of a battery-operated screwdriver (10) enters only with its on/off button (26) into the embedded portions (25, 251, 252) in a keel-like manner, and the handle (14) itself projects from the charging unit (22) and dips into the embedded portion (25, 251, 252) only to a minimum extent.

4. Charging unit (22) according to one of the preceding claims, **characterized in that** the embedded portions (25, 251, 252) are such that the handle (14) of a battery-operated screwdriver (10) projects from the charging unit (22) to such an extent that the battery-operated screwdriver (10) can be gripped comfortably with a hand from the underside and/or can be gripped with a hand largely around it for removal purposes.

5. Charging unit (22) according to one of the preceding claims, **characterized in that**, in the charging mode, charging-contact tongues (37) of a battery-operated screwdriver (10) latch onto charging contacts (23) of the charging unit (22), without it being necessary for separate cables or coupling plugs to be actuated.

6. Charging unit (22) according to Claim 5, **characterized in that** the charging contacts (23) of the charging unit (22) are of resilient configuration and a battery-operated screwdriver (10) can be positioned in the embedded portions (25, 251, 252) in such a way that depressions (33) in the handle (14) of the battery-operated screwdriver (10) engage around the charging contacts (23) and are therefore secured in a latching manner against undesired release from the charging unit (22).

7. Charging unit (22) according to one of the preceding claims, **characterized in that** the charging unit (22) can be placed in a stable manner onto a flat, in particular horizontal, depositing surface, without it being fastened and held fixedly when the battery-operated screwdriver (10) is removed.

## Revendications

1. Appareil de charge (22) pour une visseuse à batterie (10), qui présente sur son côté supérieur (10) des renfoncements (25, 251, 252) pour recevoir une visseuse à batterie (10), **caractérisé en ce que** les renfoncements (25, 251, 252) correspondent à une empreinte de surfaces extérieures d'angle inclus formées par la poignée (14), le boîtier du moteur (12) et le boîtier du mécanisme (18) d'une visseuse à batterie (10) et **en ce qu'**au moins l'un des renfoncements (25, 251, 252) s'étend suivant un angle inférieur à 90° par rapport à la verticale, une visseuse à batterie (10) pouvant être positionnée dans les renfoncements (25, 251, 252) de telle sorte que la broche de sortie (20) soit inclinée par rapport à la verticale et que l'extrémité de la broche de sortie (20) soit orientée vers le bas.

2. Appareil de charge (22) selon la revendication 1, **caractérisé en ce que** les renfoncements (25, 251, 252) s'étendent suivant un angle d'inclinaison d'environ 30 à 45° par rapport à la verticale, une visseuse à batterie (10) pouvant être positionnée dans les renfoncements (25, 251, 252) de telle sorte que la broche de sortie (20) soit inclinée d'environ 30 à 45° par rapport à la verticale et que l'extrémité de la broche de sortie (20) soit orientée vers le bas.

3. Appareil de charge (22) selon l'une quelconque des revendications 1 ou 2, **caractérisé en ce que** les renfoncements (25, 251, 252) sont configurés de telle sorte que la poignée (14) d'une visseuse à batterie (10) n'entre dans les renfoncements (25, 251, 252) à la manière d'une quille qu'avec son bouton de marche arrêt (26), et que la poignée (14) dépasse elle-même de l'appareil de charge (22) et ne plonge que dans une mesure minimale dans le renfoncement (25, 251, 252).

4. Appareil de charge (22) selon l'une quelconque des revendications précédentes, **caractérisé en ce que** les renfoncements (25, 251, 252) sont configurés de telle sorte que la poignée (14) d'une visseuse à batterie (10) dépasse de l'appareil de charge (22) dans une mesure telle que la visseuse à batterie (10) puisse être confortablement saisie par la main pour l'enlever par le dessous et/ou sensiblement par son pourtour.

5. Appareil de charge (22) selon l'une quelconque des revendications précédentes, **caractérisé en ce que** dans le mode de charge, des langues de contact de charge (37) d'une visseuse à batterie (10) s'encliquètent sur des contacts de charge (23) de l'appareil de charge (22), sans que des câbles ou des connecteurs d'accouplement séparés ne doivent être actionnés.

6. Appareil de charge (22) selon la revendication 5, **caractérisé en ce que** les contacts de charge (23) de l'appareil de charge (22) sont réalisés sous forme élastique, et une visseuse à batterie (10) peut être positionnée dans les renfoncements (25, 251, 252) de telle sorte que des creux (33) dans la poignée (14) de la visseuse à batterie (10) viennent en prise par le dessus avec les contacts de charge (23) et sont fixées par encliquetage par le dessus contre un desserrage indésirable de l'appareil de charge (22).

7. Appareil de charge (22) selon l'une quelconque des revendications précédentes, **caractérisé en ce que** l'appareil de charge (22) peut être posé de manière stable sur une surface de support plane, notamment horizontale, sans être fixé et maintenu, lorsque la visseuse à batterie (10) est retirée.
